# EUROPÄISCHE PATENTSCHRIFT

(11) **EP 0 693 984 B1**
(45) Veröffentlichungstag und Bekanntmachung des Hinweises auf die Patenterteilung: **27.08.1997**
(21) Anmeldenummer: 94913564.4
(22) Anmeldetag: 09.04.1994
(51) Int. Cl.: B23C 5/10, B23B 31/11, B23Q 16/08, F16D 1/06, B23B 27/00

(54) **SCHNEIDWERKZEUG**
CUTTING TOOL
OUTIL DE COUPE

(30) Priorität: 14.04.1993 DE 4312216; 11.09.1993 DE 4330826
(43) Veröffentlichungstag der Anmeldung: 31.01.1996
(73) Patentinhaber: ZETTL GMBH CNC PRÄZISIONS- UND SONDERWERKZEUGE, 87488 Betzigau (DE)
(72) Erfinder: NESPETA, Horst, D-87439 Kempten (DE); PÖTZL, Alfred, D-87471 Durach (DE); SIMON, Manfred, D-87616 Marktoberdorf (DE); PFOB, Franz, D-87463 Probstried (DE)
(74) Vertreter: Hübner, Hans-Joachim, Dipl.-Ing.
(86) Internationale Anmeldenummer: EP9401104
(87) Internationale Veröffentlichungsnummer: WO9423874

(56) Entgegenhaltungen:
- CH-A- 599 820
- DE-A- 3 838 071
- FR-A- 1 477 239
- FR-A- 2 020 138
- FR-A- 2 321 069
- US-A- 2 787 894
- US-A- 2 844 947
- US-A- 2 956 423
- MACHINE DESIGN, Bd.60, Nr.18, 11. August 1988, CLEVELAND US D. RYFFEL 'A better Way to make Shaft Connections'

## Beschreibung

Die Erfindung betrifft ein Fräswerkzeug mit einer an ihrem Umfang mindestens einen Schneidzahn aufweisenden Fräsplatte, die mittels einer koaxialen Kopfschraube an einem Halter festschraubbar ist.

Die WO 94/19132, die einen Stand der Technik nach Art. 54 (3) EPÜ bildet, zeigt eine solche Fräsplatte, die einen unrunden Ansatz aufweist, dem eine komplementäre, jedoch etwas größere Stirnausnehmung im Halter zugeordnet ist. Die Kontur des Ansatzes läßt sich als Drei- oder Viereck beschreiben, bei dem die "Ecken" durch Halbkreise kleinen Durchmessers und die Seiten durch konkave Kreisbögen größeren Durchmessers gebildet sind. Letztere tangieren einen kreiszylindrischen, koaxialen Führungszapfen, der am Ansatz ausgebildet ist und mit welchem die Fräsplatte in einer Bohrung des Halters zentriert wird. Der Ansatz besteht also aus einem hohlen Kern, von dem sich 3 oder 4 Radialarme nach außen erstrecken. Im Betrieb verdreht sich die Fräsplatte im Halter etwas, wobei es zu einer definierten Drei- oder Vierpunktanlage des Ansatzes in der Stirnausnehmung kommt. An diesen Kontaktstellen sollen die Antriebskräfte des Halters möglichst rechtwinklig auf die Kupplungsflächen der Radialarme des Ansatzes der Fräsplatte übertragen werden, weswegen ein möglichst kleiner Winkel zwischen den Tagenten der Kupplungsflächen an den Kontaktstellen und deren Radien angestrebt wird.

Diese Fräsplatte ist für kleine Arbeitsradien ungeeignet, weil die Radialarme zu schmal wären, um hohen Schnittkräften standzuhalten. Die Geometrie des Ansatzes schließt auch eine Herstellung der Fräsplatte als Sinterhartmetallkörper aus. Schließlich gewährleisten die Kupplungsflächen für die Drehmomentübertragung keine Selbstzentrierung, vielmehr ist der zusätzliche Führungszapfen am Ansatz nötig, der die Herstellung verteuert.

Aus der DE-A-40 26 651 ist es bekannt eine Sintermetall-Fräsplatte mittels eines Zugbolzens gegen einen hohlen Halter zu spannen, wozu aber eine rückseitige Spannvorrichtung erforderlich ist. Der Zugbolzen hat im Bereich der Fräsplatte und dem Ende des Halters eine zylindrische Außenpolygon-Kontur. Die Fräsplatte und das Halterende haben komplementäre Innenpolygon-Konturen. Das unvermeidbare Fügespiel ist somit einmal zwischen Fräsplatte und Zugbolzen und zum anderen zwischen diesem und dem Halter vorhanden. Dies führt zu Rundlauffehlern. Der Zugbolzen is mit hoher Zugkraft vorgespannt, was einer Relativverdrehung der Fräsplatte am Halter innerhalb der Fügetoleranzen entgegensteht, sodaß eine Selbstzentrierung der Fräsplatte mindestens behindert ist. Dies wirkt sich ebenfalls als Rundlauffehler aus. Außerdem ist der Zugbolzen an der Schnittstelle zwischen Fräsplatte und Halter einer hohen Scherwirkung ausgesetzt, sodaß an dieser Stelle Bruchgefahr besteht. Schließlich ist der Fräsplattenwechsel umständlich, da der Halter der Fräsplatte aus der Werkzeugmaschine entfernt werden muß.

Die EP-A-0084609 zeigt eine dreieckig konturierte Fräsplatte, die zwischen drei stirnseitigen Vorsprüngen des Halters formschlüssig aufgenommen und mittels einer ein Zentralloch der Fräsplatte durchdringenden Schraube befestigt ist, welche im wesentlichen keinen Axialkräften ausgesetzt ist. Die Fräsplatte läßt sich zwar als Sinterteil herstellen, jedoch können die separierten Vorsprünge am Halter bei hohen Schneidleistungen des Fräswerkzeuges wegbrechen.

Aus der CH-A-599820 ist ein Bearbeitungswerkzeug bekannt, das einen, an einem Schaft befestigten Sinterhartmetall-Schneidkopf aufweist. Der Schaft hat einen Ansatz in Form eines Sechseckpyramidenstumpfes, welcher in eine komplementäre Ausnehmung des Schneidkopfes formschlüssig eingreift und mittels einer zentralen Schraube am Schaft lösbar befestigt ist. Die Innenkontur der Ausnehmung läßt sich an dem gesinterten Schneidkopf nicht nachschleifen, sodaß Schneidköpfe verschiedener Sinterproduktionen große Toleranzunterschiede in ihren Ausnehmungen aufweisen, was dazu führt, daß weder reproduzierbare Axialpositionen ausgewechselter Schneidköpfe am Schaft, noch hohe Rund- und Planlaufeigenschaften erzielbar sind. Bei dem bekannten Werkzeug stört das nicht, weil es sich um ein feststehendes Werkzeug zur Bearbeitung rotierender Werkstücke handelt. Dagegen ist dieser Vorschlag für hochgenaue Fräswerkzeuge nicht einsetzbar, zumal auch hier die Befestigungsschraube während der Bearbeitung hohen axialen Reaktionskräften ausgesetzt wäre.

Ausgehend vom eingangs genannten Stand der Technik, liegt der Erfindung die Aufgabe zugrunde, die Formschlußverbindung zwischen Fräsplatte und Halter einfacher und so zu gestalten, daß die Fräsplatte als einstückiges Sintermetallteil hergestellt werden kann, extrem hohen Schnittkräften standhält, in Kleinstausführung herstellbar ist und eine volle Zentrierfunktion allein durch die Form der Kupplungsflächen des Ansatzes und des Halters erfüllt.

Diese Aufgabe wird durch die Merkmale des Patentanspruches 1 oder in der Umkehrversion durch diejenigen von Patentanspruch 2 gelöst.

Mit der Erfindung werden alle die, dem Stand der Technik anhaftenden Nachteile vermieden. Das Fräswerkzeug läßt sich darüberhinaus kostengünstiger fertigen. Es gewährleistet hohe Plan- und Rundlaufgenauigkeiten und erfüllt die Selbstzentrierfunktion der Fräsplatte. Beim Fräsplattenwechsel bleibt die Axialposition am Halter erhalten. Die Befestigungsschraube bleibt spannungsfrei.

Die Zeichnung veranschaulicht Ausführungsbeispiele der Erfindung.

Es zeigt:

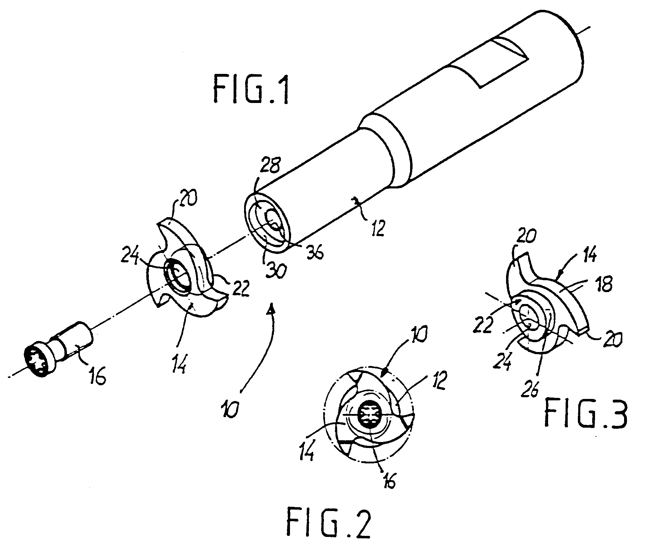

- FIG. 1:: eine Explosionsdarstellung eines Schneidwerkzeuges mit Fräsplatte, Halter und Befestigungsschraube,
- FIG. 2: eine vordere Stirnansicht auf das Werkzeug im zusammengebauten Zustand,
- FIG. 3: eine rückseitige Ansicht der Schneidplatte,

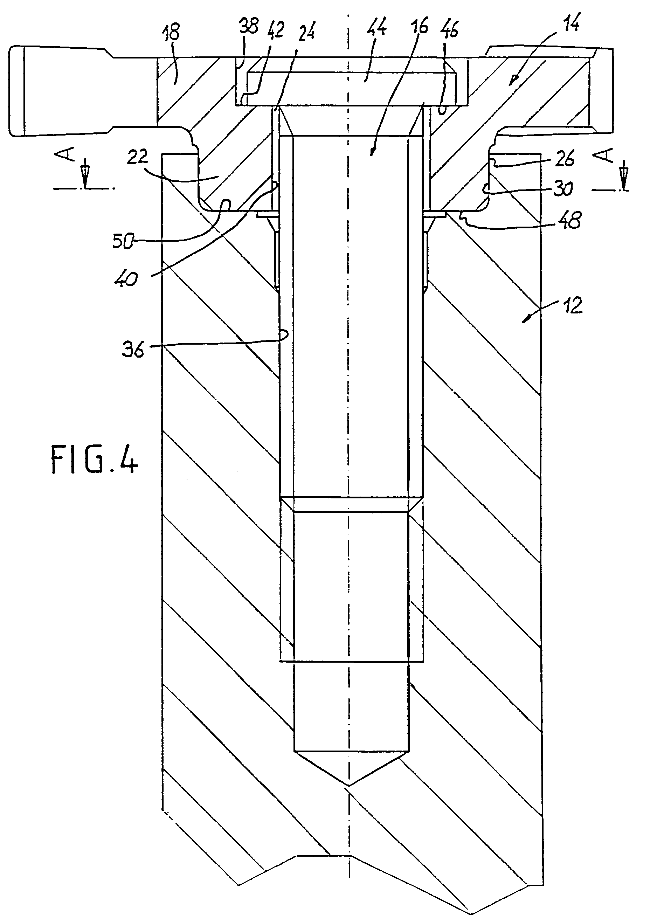

- FIG. 4: einen Axialschnitt durch das Schneidwerkzeug in größerem Maßstab,
- FIG. 5: eine Querschnittsansicht des Schneidwerkzeuges längs der Linie A-A der Fig. 4 im unbelasteten Zustand,
- FIG. 6: eine Schnittansicht ähnlich Fig. 5, jedoch in belastetem Zustand,
- FIG. 7: eine Stirnansicht eines Schneidwerkzeuges mit einem tellerartigen Kopf, an dem mehrere Schneidplatten exzentrisch befestigt sind,
- FIG. 8: eine Querschnittsansicht ähnlich Fig. 5, jedoch durch eine Viereck-Polygonaufnahme,
- FIG. 9: eine Querschnittsansicht eines weiter abgewandelten Polygonprofils,
- FIG. 10: einen Axialschnitt ähnlich Fig. 4, jedoch durch eine Variante,
- FIG. 11: einen Axialschnitt ähnlich Fig. 10 einer weiteren Abwandlung, und
- FIG. 12: einen Querschnitt durch das Schneidwerkzeug gemäß Fig. 11 im Bereich der Formschlußkupplung.

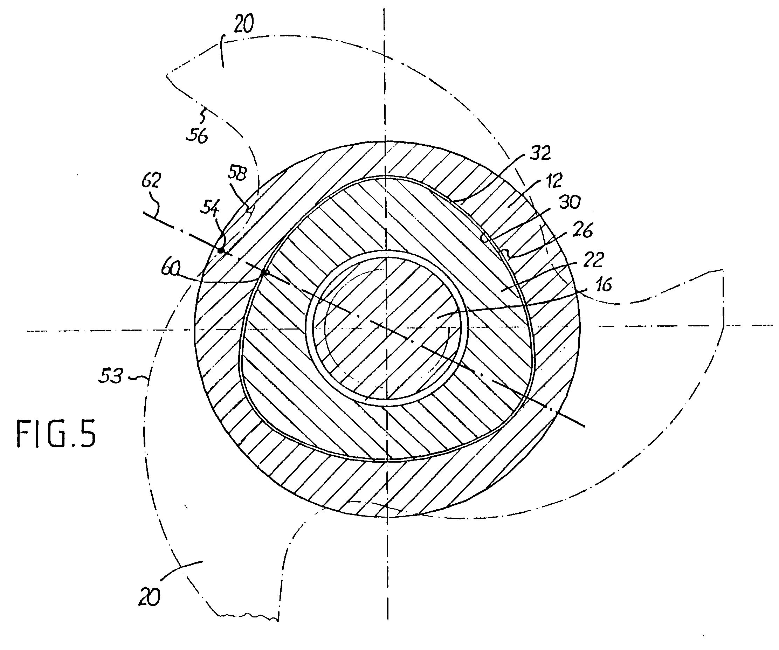

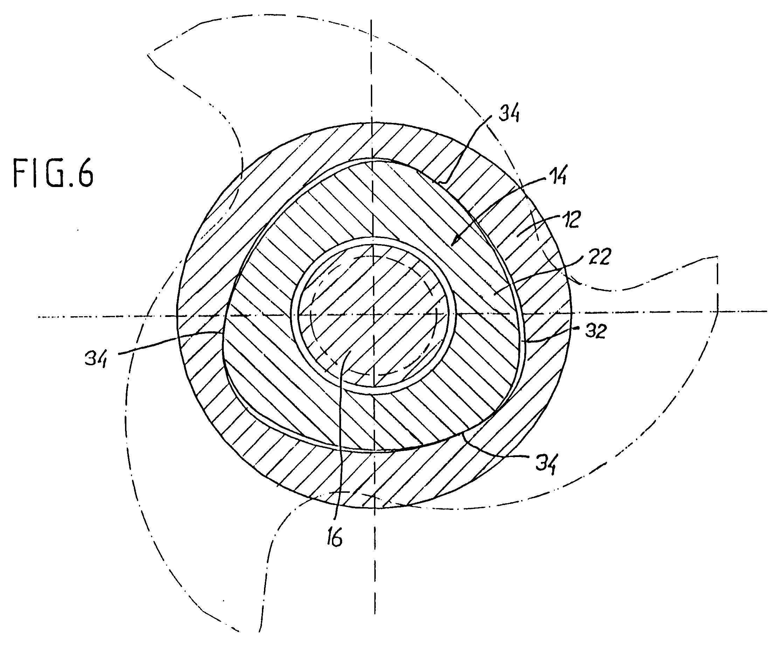

Ein Schneidwerkzeug 10 besteht aus einem Halter 12, einer Schneidplatte 14 und einer Befestigungsschraube 16. Die Fräsplatte 14 setzt sich aus einem scheibenförmigen Körper 18 mit drei Zähnen 20 und einem einstückig während der Urformbildung angeformten Ansatz 22 zusammen. Ein Durchgangsloch 24 durchsetzt die ganze Fräsplatte 14, erstreckt sich also durch den scheibenförmigen Körper 18 und den Ansatz 22. Der Ansatz 22 hat eine Kupplungsfläche 26, die zur Stirnfläche 48 des Ansatzes 22 exakt rechtwinklig steht und die Kontur eines Dreieck-Konvexpolygons hat. Der Halter 12 hat eine stirnseitige Ausnehmung 28, die ringsum von einem Wandring des Halters 12 umgeben ist. Diese Ausnehmung 28 hat eine Gegenfläche 30, die eine Dreieck-Konkavpolygonkontur aufweist, welche zu derjenigen des Ansatzes 22 exakt komplementär ausgebildet ist. Beide Flächen 26, 30 liegen koaxial zur Achse des Halters 12 und der Fräsplatte 14. Die Polygonkontur setzt sich aus drei Kreisbögen kleinen Durchmessers und jeweils dazwischenliegenden und stetig anschließenden Kreisbögen großen Durchmessers zusammen. Zwischen den beiden Flächen 26, 30 wird ein Ringspalt 32 gebildet, der im unbelasteten Zustand des Schneidwerkzeuges eine konstante Spaltbreite hat (Fig. 5). Im belasteten Zustand (Fig. 6) tritt eine Relativdrehung der Fräsplatte 14 zum Halter 12 auf und es bilden sich drei Kontaktzonen 34 von erheblicher Umfangserstreckung. Die Koaxialität von Schneidplatte 14 und Halter 12 bleibt durch die selbstzentrierende Wirkung des Dreieckpolygons erhalten.

Das Durchgangsloch 24 ist gestuft und hat eine kreiszylindrische Locherweiterung 38 größeren Durchmessers, die hauptsächlich dem scheibenförmigen Körper 18 zugeordnet ist und zur Aufnahme des Kopfes 44 der Schraube 16 dient, sowie einen Lochabschnitt 40 kleineren Durchmessers, der hauptsächlich dem Ansatz 22 zugeordnet ist. Dazwischen wird eine in einer Radialebene liegende Ringschulter 42 gebildet, die eine radiale Ringfläche 46 des Schraubenkopfes 44 abstützt. Zwischen Kopf 44 und Locherweiterung 38 einerseits und dem angrenzenden Schaft der Befestigungsschraube 16 und dem Bohrungsabschnitt 40 andererseits herrscht jeweils ein Radialabstand, womit sichergestellt ist, daß die Befestigungsschraube 16 ohne jegliche Zentrierfunktion ist. Die Formschluß-Verbindung zwischen Fräsplatte 14 und Halter 12 wird ausschließlich durch den Ansatz 22 der Fräsplatte 14 und der Stirnausnehmung 28 im Halter 12 gebildet. Den radialen Formschluß stellen die Kupplungs- und Gegenfächen 26, 30 sicher und die Winkellage gewährleisten die exakt rechtwinklig zu den Achsen von Fräsplatte 14 und Halter 12 geschliffenen Planflächen 48, 50 des Ansatzes 22 und der Stirnausnehmung 28. Die Axialabstützung der Fräsplatte 14 erfolgt ausschließlich im Bereich des Ansatzes 22, also im Zentralbereich der Fräsplatte 14. Der Ansatz 22 ist länger als die Ausnehmung 28 tief ist, sodaß die Fräsplatte 14 mit ihren Zähnen 20 und in dem, an die Zähne angrenzenden Ringbereich des scheibenförmigen Körpers 18 von der Stirnfläche des Halters 12 axial beabstandet ist.

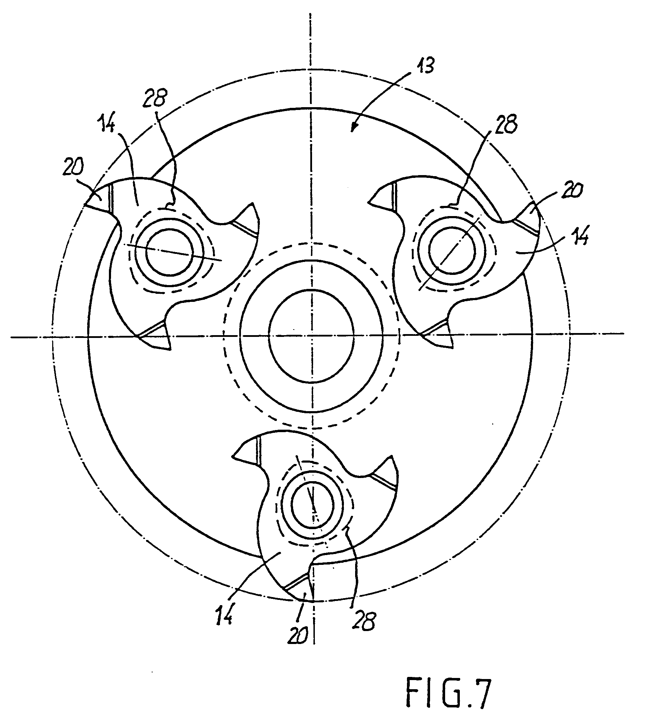

Figur 7 veranschaulicht einen tellerartigen Kopf 13 eines Schneidwerkzeuges, der in seiner Stirnfläche im 120°-Winkelabstand gestrichelt dargestellte Stirnausnehmungen 28 aufweist, in die jeweils eine Fräsplatte 14 mit ihrem Dreieckpolygon-Ansatz 22 - wie vorbeschrieben - eingsetzt ist. Jeweils ein Schneidzahn 20 steht über den Umfang des Kopfes 13 radial vor. Der Schneidzahn 20 liegt axial beabstandet von der Stirnfläche des Kopfes 13. Die Fräsplatte 14 bilden hier Wendeschneidplatten.

Wie sich aus Fig. 5 ergibt, fallen die gerundeten "Ecken" des Polygons mt der Winkelhalbierenden zwischen den Punkten zusammen, an denen die Vorderfläche 56 und die Hinterfläche 53 jedes Zahnes 20 die Kontur des Halters 12 schneiden. Die Stelle 54, wo die konvex gewölbte Hinterfläche 53 jedes Zahnes 20 in die zur Vorderfläche 56 des benachbarten Zahnes 20 führende konkave Übergangsfläche 58 übergeht, liegt somit jeweils mit der Stelle 60 geringster Radialerstreckung des Dreieck-Konvexpolygons in derselben Radialebene 62.

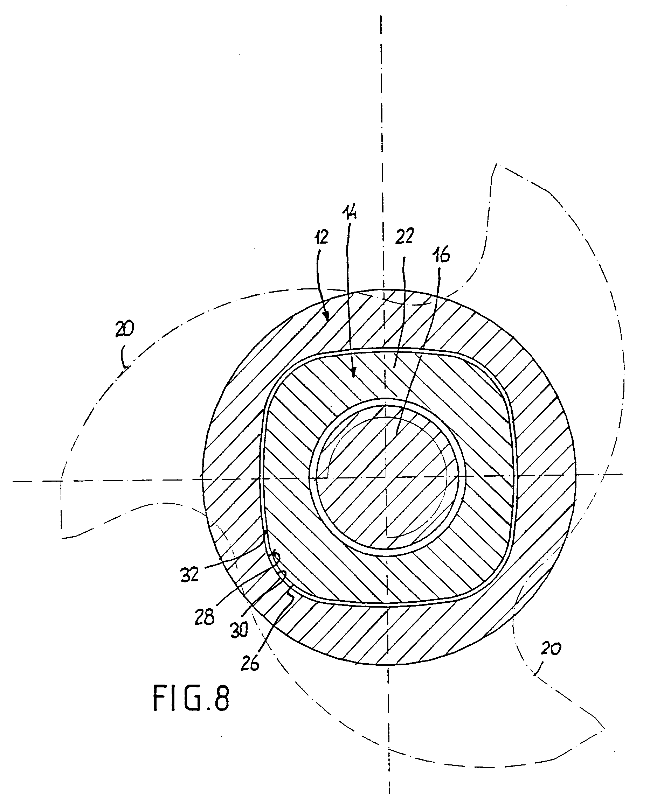

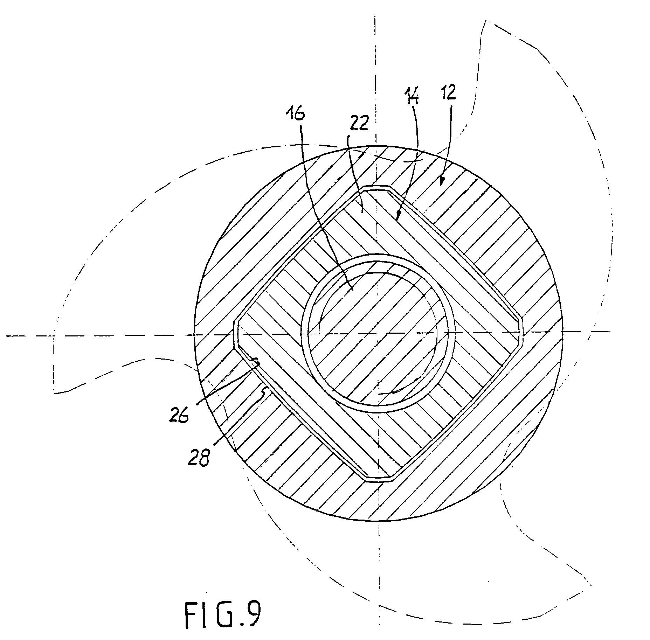

Die Figuren 8 und 9 zeigen Querschnitte von zwei Viereck-Polygonkupplungen einer platte 14 mit einem Halter 12 ebenfalls in der Ebene A-A der Fig. 5. die Kupplungsfläche 26 des Ansatzes 22 setzt sich aus vier konvex gewölbten Flächenabschnitten mit großem Krümmungsradius und vier Flächenabschnitten mit kleinem Krümmungsradius zusammen. Alle Flächenabschnitte gehen stetig und kantenfrei ineinander über.

Im Unterschied zur Fig. 8 ist in Fig. 9 ein Profil für eine Viereckpolygonkupplung dargestellt. Zwischen je einem längeren Flächenabschnitt großen Durchmessers und einem kürzeren Flächenabschnitt von ebenfalls großem Durchmesse wird eine kurze Übergangszone mit kleinem Durchmesser gebildet, die in vorliegender Darstellung fast als Ecke erscheint.

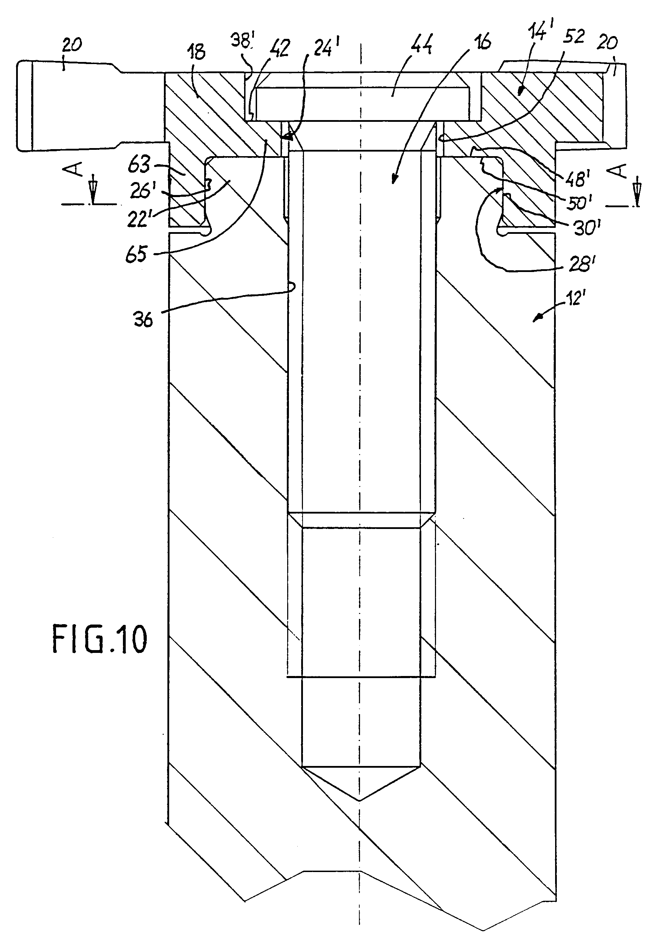

Fig. 10 zeigt einen Axialschnitt durch ein abgewandeltes Schneidwerkzeug bei dem der Ansatz 22' dem Halter 12' und die komplementäre Ausnehmung 28' der Fräsplatte 14' zugeordnet sind. Das Durchgangsloch 24' weist eine Locherweiterung 38', einen mittleren Lochabschnitt 52 und eine Ausnehmung 28' auf, die in einem Bundansatz 63 der Fräsplatte 14' gebildet ist und deren Innenfläche die Kupplungsfläche 26' mit Mehreck-Konkavpolygonkontur entsprechend den Figuren 5, 8 oder 9 aufweist. Die Bodenfläche 50' der Ausnehmung 28' wird an einer Ringwand 65 gebildet, die den mittleren Lochabschnitt 52 begrenzt. An diesen schließt sich unter Bildung einer radialen Ringfläche 42' die Locherweiterung 38' zur Aufnahme des Schraubenkopfes 44 an. Zwischen diesem und dem Umfang der Locherweiterung 38' sowie zwischen dem Schraubenschaft und dem mittleren Lochabschnitt 52 herrscht jeweils ein Radialabstand.

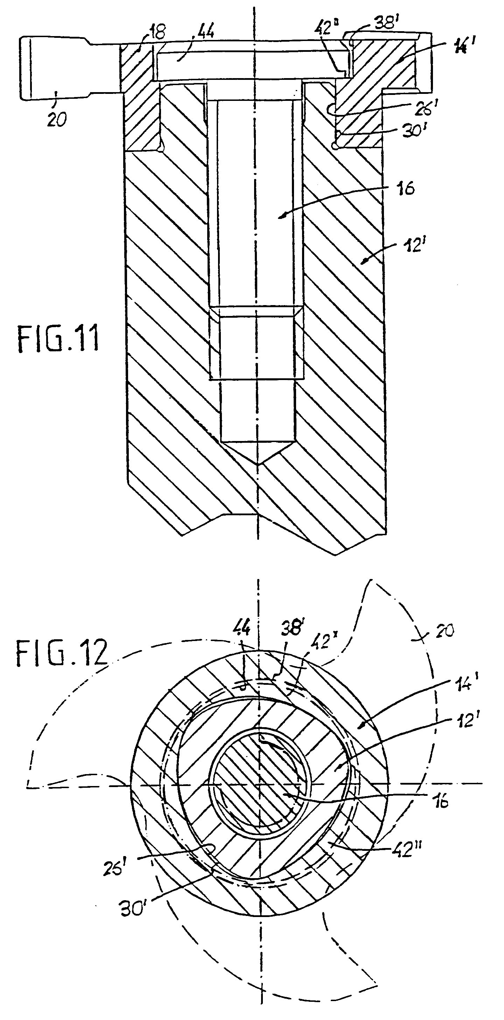

In der Ausführung gemäß Fig. 11 und 12 fehlt die Ringwand 65 und die Ausnehmung 28' mündet in der Locherweiterung 38' unter Bildung von Anlageschultern 42'' Der Innenradius der Locherweiterung 38' ist gleich dem Radius am Scheitel der Polygonabschnitte kleinen Durchmessers (Fig. 5, 8) Der Schraubenkopf 44 stützt sich auf drei (Fig. 5) bzw. vier (Fig. 8) sichelförmigen Auflageschulterflächen 42'' ab.

Der Halter 12' gemäß Fig. 10 bis 12 weist einen von seiner Stirnfläche vorspringenden Ansatz 22' auf, dessen Querschnitt eine Mehreck-Konvexpolygonkontur aufweist, die zu der Innenkontur der Ausnehmung 28' komplementär ist. Gemäß Fig. 10 ist der Ansatz 22' etwas höher als die Ausnehmung 28' tief ist. Die Fräsplatte 14' stützt sich daher nur im zentralen Bereich nicht aber im äußeren Umfangsbereich am Halter 12' ab.

Die Stirnfläche 48' des Ansatzes 22' ist plangeschliffen und dient bei der Ausführung gemäß Fig. 10 als alleiniger Axialsitzfläche für die ebenfalls plangeschliffene Bodenfläche 50' der Ausnehmung 28' der Fräsplatte 14'. Die Stirnfläche des Bundansatzes 63 bedarf dann keiner Bearbeitung.

Auch bei den Ausführungen gemäß Fig. 10 bis 12 gilt, daß die Schneidzähne 20 und der an die Schneidzähne 20 angrenzende Ringbereich der Fräsplatte 14' vom Halter 12' axial beabstandet sind. Bei einer Beschädigung der Fräsplatte 14' wird die Plattenaufnahme am Haller 12' nicht in Mitleidenschaft gezogen.

## Patentansprüche

1. Fräswerkzeug mit einer, an ihrem Umfang mindestens einen Schneidzahn (20) aufweisenden Fräsplatte (14) als Sinterteil, die ein zentrales Durchgangsloch (24) aufweist, das an einer Stirnseite mit einer Locherweiterung (38) mündet und die eine erste zylindrische Kupplungsfläche (26) mit gerundeter Mehreck-Polygonkontur aufweist, die zur formschlüssigen Kupplung mit einer ebenfalls polygonalen Gegenfläche (30) einer Stirnausnehmung (28) eines Halters (12) bestimmt ist, der eine achsparallele Gewindebohrung (36) aufweist, wobei die Fräsplatte (14) eine zu ihrer ersten Kuppungsfäche (26) exakt rechtwinklig geschliffene zweite Planfläche (48) aufweist, mit der sie auf einer, die Stirnausnehmung (28) des Halters (12) begrenzenden Planfläche (50) abgestützt ist, wobei die Fräsplatte (14) mit einer ihr Durchgangsloch (24) durchsetzenden koaxialen Kopfschraube (16) am Halter (12) festschraubbar ist, die erste Kupplungsfläche (26) ein Außenpolygon ist und die äußere Umfangsfläche eines stirnseitigen Ansatzes (22) der Fräsplatte (14) bildet, zwischen der und deren Ansatz (22) eine trennstellenfreie, homogene Gefügestruktur besteht, die zweite Kupplungsfläche (48) der Fräsplatte (14) an der Stirnfläche des Ansatzes (22) ausgebildet ist, die Stirnausnehmung (28) des Halters (12) eine Bodenringfläche aufweist, die die Planfläche (50) des Halters (12) bildet, der Ansatz (22) höher als die Stirnausnehmung (28) des Halters (12) tief ist und in diese eintaucht und deren innere Gegenfläche (30) wenigstens angenähert komplementär zur ersten Kupplungsfläche (26) des Ansatzes (22) ausgebildet ist.

2. Fräswerkzeug mit einer, an ihrem Umfang mindestens einen Schneidzahn (20) aufweisenden Fräsplatte (14') als Sinterteil, die ein zentrales Durchgangsloch (24') aufweist, das an einer Stirnseite mit einer Locherweiterung (38') und an der anderen Stirnseite mit einer Ausnehmung (28') mündet, welche eine erste zylindrische Kupplungsfläche (26') mit gerundeter Mehreck-Innenpolygonkontur bildet, die zur formschlüssigen Kupplung mit einer ebenfalls polygonalen Gegenfäche (30') eines Halters (12') bestimmt ist, der eine achsparallele Gewindebohrung (36') aufweist, wobei die Fräsplatte (14') eine zu ihrer ersten Kupplungsfläche (26') exakt rechtwinklig geschliffene zweite Bodenfläche (50') aufweist, mit der sie auf einer radialen Stirnfläche (48') des Halters (12') abgestützt ist, wobei die Fräsplatte (14') mit einer ihr Durchgangsloch (24') durchsetzenden koaxialen Kopfschraube (16) am Halter (12') festschraubbar ist, und die polygonale Gegenfläche (30') des Halters (12') ein Außenpolygon ist, zur ersten Kuppungsfläche (26') der Fräsplatte (14') wenigstens angenähert komplementär ausgebildet ist und die äußere Umfangsfläche eines am Halter (12') einstückig ausgebildeten stirnseitigen Ansatzes (22') bildet, der in die Ausnehmung (28') der Fräsplatte (14') eintaucht, wobei der Querschnitt der Ausnehmung (28') der Fräsplatte (14') größer als der Querschnitt der Gewindebohrung (36') im Halter (12') ist, und wobei entweder die Ausnehmung (28') von einer Ringschulterfläche begrenzt ist, welche die zweite Bodenfläche (50') bildet, während die radiale Stirnfläche (48') des Halters (12') an dessen Ansatz (22') ausgebildet ist und dessen Höhe größer als die Tiefe der Ausnehmung (28') ist oder der Ansatz (22') des Halters (12') von einer Ringfläche umgeben ist, die dessen radiale Stirnfläche bildet, an der sich die Fräsplatte (14') mit ihrer zweiten Kupplungsfläche abstützt.

3. Fräswerkzeug nach Anspruch 2, **dadurch gekennzeichnet, daß** die Ausnehmung (28') der Fräsplatte (14') in einem Bundansatz (63) der Fräsplatte (14') gebildet ist.

4. Fräswerkzeug nach Anspruch 2 oder 3, bei dem sich die erste Kupplungsfläche (26') bis zur Locherweiterung (38') erstreckt, **dadurch gekennzeichnet, daß** die Locherweiterung (38') einen Durchmesser mindestens gleich dem Zweifachen des größten Scheitelradius' der ersten Kupplungsfläche (26') aufweist, und daß zwischen der Locherweiterung (38') und der ersten Kupplungsfläche (26') mehrere umfangsverteilte sichelförmige Auflageschulterflächen (42'') zur Abstützung des Kopfes (44) der Schraube (16) gebildet sind.

5. Fräswerkzeug nach einem der Ansprüche 1 bis 4, **dadurch gekennzeichnet, daß** die erste Kupplungsfläche (26, 26') sich aus einer Anzahl kreiszylindrisch gewölbter Abschnitte großen Durchmessers und einer gleichen Anzahl wenigstens angenähert kreiszylindrisch gewölbter Abschnitte kleineren Durchmessers zusammensetzt, von denen jeweils einer unter stetigem Übergang mit zwei Abschnitten großen Durchmessers verbunden ist.

## Claims

1. A milling tool comprising a milling plate (14) formed as a sintered part and provided with at least one cutting tooth (20) on its circumference and having a central through-bore (24) with a countersunk portion (38) at one end and having a first, cylindrical coupling surface (26) with a rounded polygonal contour for positive connection to a likewise polygonal counter surface (30) of an end recess (28) of a holder (12) provided with an axially parallel threaded bore (36), wherein the milling plate (14) has a second, flat surface (48) ground exactly at right angles to its first coupling surface (26) and supporting the milling plate (14) against a flat surface (50) bounding the end recess (28) of the holder (12), wherein the milling plate (14) is screwable to the holder (12) by means of a co-axial cap screw (16) extending through the through-bore (24), the first coupling surface (26) is an external polygon and forms the outer circumferential surface of an end projection (22) of the milling plate (14), the milling plate (14) and the projection (22) being a joint-free, homogeneous structure, the second coupling surface (48) of the milling plate (14) is formed on the end surface of the projection (22), the end recess (28) of the holder (12) has an annular base surface forming the flat surface (50) of the holder (12), the projection (22) is longer than the end recess (28) of the holder (12) is deep and extends into the said end recess (28), and the inner counter surface (30) thereof is formed so as to be at least substantially complementary to the first coupling surface (26) of the projection (22).

2. A milling tool comprising a milling plate (14') formed as a sintered part and provided with at least one cutting tooth (20) on its circumference and having a central through-bore (24') with a countersunk portion (38') at one end and, at the other end, a recess (28') forming a first, cylindrical coupling surface (26') with a rounded polygonal inner contour for positive connection to a likewise polygonal counter surface (30') of a holder (12') provided with an axially parallel threaded bore (36'), wherein the milling plate (14') has a second base surface (50') ground exactly at right angles to its first coupling surface (26') and supporting the milling plate (14') against a radial end surface (48') of the holder (12), wherein the milling plate (14') is screwable to the holder (12') by means of a co-axial cap screw (16) extending through the through-bore (24'), and the polygonal counter surface (30') of the holder (12') is an external polygon, is formed so as to be at least substantially complementary to the first coupling surface (26') of the milling plate (14') and forms the outer circumferential surface of an end projection (22') integrally formed on the holder (12') and extending into the recess (28') of the milling plate (14'), wherein the cross-section of the recess (28') of the milling plate (14') is greater than the cross-section of the threaded bore (36') in the holder (12'), and wherein either the recess (28') is bounded by an annular shoulder surface forming the second base surface (50'), while the radial end surface (48') of the holder (12') is formed on the projection (22') thereof, the length of the projection (22') being greater than the depth of the recess (28'), or the projection (22') of the holder (12') is surrounded by an annular surface which forms the radial end surface of the holder (12') and against which the second coupling surface of the milling plate (14') is supported.

3. A milling tool according to claim 2, characterised in that the recess (28') of the milling plate (14') is formed in a collar-type projection (63) of the milling plate (14').

4. A milling tool according to claim 2 or 3, wherein the first coupling surface (26') extends as far as the countersunk portion (38'), characterised in that the countersunk portion (38') has a diameter at least equal to twice the largest vertex radius of the first coupling surface (26'), and in that a plurality of crescent-shaped supporting shoulder surfaces (42''), distributed over the circumference between the countersunk portion (38') and the first coupling surface (26'), are provided for supporting the head (44) of the screw (16).

5. A milling tool according to any one of claims 1 to 4, characterised in that the first coupling surface (26, 26') comprises a number of circular-cylindrically curved portions of large diameter and an equal number of at least substantially circular-cylindrically curved portions of smaller diameter, each of which is connected to two portions of large diameter with uniform transition.

## Revendications

1. Outil de fraisage avec une plaque de fraisage (14), réalisée sous forme d'élément fritté et présentant, sur son pourtour, au moins une dent de coupe (20), qui présente un trou de passage central (24) qui aboutit, d'un côté frontal, par un élargissement de trou (38) et qui présente une première face de couplage cylindrique (26) à contour polygonal arrondi, destinée au couplage en liaison de forme avec une contre-face (30), également polygonale, d'un évidement frontal (28) d'un manche (12) qui présente un alésage taraudé (36) parallèle à l'axe, dans lequel la plaque de fraisage (14) présente une seconde face plane (48), dressée de manière exactement perpendiculaire à sa première face de couplage (26), par laquelle elle s'appuie sur une face plane (50) délimitant l'évidement frontal (28) du manche (12), la plaque de fraisage (14) pouvant être fixée au manche (12) par vissage à l'aide d'une vis à tête (16) coaxiale traversant son trou de passage (24), la première face de couplage (26) étant un polygone extérieur et formant la face périphérique extérieure d'une pièce rapportée (22) du côté frontal de la plaque de fraisage (14), entre laquelle et sa pièce rapportée (22) existe une structure homogène exempte de points de séparation, la seconde face de couplage (48) de la plaque de fraisage (14) étant réalisée sur la face frontale de la pièce rapportée (22), l'évidement frontal (28) du manche (12) présentant une face annulaire inférieure qui forme la face plane (50) du manche (12), la pièce rapportée (22) étant plus haute que n'est profond l'évidement frontal (28) du manche (12) et s'enfonçant dans celui-ci, et sa contre-face intérieure (30) étant réalisée de forme au moins environ complémentaire à la première face de couplage (26) de la pièce rapportée (22).

2. Outil de fraisage avec une plaque de fraisage (14'), réalisée sous forme d'élément fritté et présentant, sur son pourtour, au moins une dent de coupe (20), qui présente un trou de passage central (24') qui aboutit, d'un côté frontal, par un élargissement de trou (38') et, de l'autre côté frontal, par un évidement (28') qui forme une première face de couplage cylindrique (26') à contour polygonal intérieur arrondi, destinée au couplage en liaison de forme avec une contre-face (30'), également polygonale, d'un manche (12') qui présente un alésage taraudé (36') parallèle à l'axe, dans lequel la plaque de fraisage (14') présente une seconde face inférieure (50'), dressée de manière exactement perpendiculaire à sa première face de couplage (26'), par laquelle elle s'appuie sur une face frontale (48') radiale du manche (12), la plaque de fraisage (14') pouvant être fixée au manche (12') par vissage à l'aide d'une vis à tête (16) coaxiale traversant son trou de passage (24'), et la contre-face polygonale (30') du manche (12') étant un polygone extérieur, réalisée de forme au moins environ complémentaire à la première face de couplage (26') de la plaque de fraisage (14') et formant la face périphérique extérieure d'une pièce rapportée (22') du côté frontal, réalisée d'une pièce avec le manche (12'), qui s'enfonce dans l'évidement (28') de la plaque de fraisage (14'), la section de l'évidement (28') de la plaque de fraisage (14') étant plus grande que la section de l'alésage taraudé (36') dans le manche (12'), et soit l'évidement (28') étant délimité par une face d'épaulement annulaire qui forme la seconde face inférieure (50'), tandis que la face frontale radiale (48') du manche (12') est réalisée sur sa pièce rapportée (22') et dont la hauteur est plus grande que la profondeur de l'évidement (28'), soit la pièce rapportée (22') du manche (12') étant entourée d'une face annulaire qui forme sa face frontale radiale sur laquelle s'appuie la plaque de fraisage (14') par sa seconde face de couplage.

3. Outil de fraisage suivant la revendication 2, caractérisé par le fait que l'évidement (28') de la plaque de fraisage (14') est réalisé dans une pièce rapportée unie (63) de la plaque de fraisage (14').

4. Outil de fraisage suivant la revendication 2 ou 3, dans lequel la première face de couplage (26') s'étend jusqu'à l'élargissement de trou (38'), caractérisé par le fait que l'élargissement de trou (38') présente un diamètre au moins égal à deux fois le rayon de sommet le plus grand de la première face de couplage (26') et qu'entre l'élargissement de trou (38') et la première face de couplage (26') sont formées plusieurs faces d'épaulement d'appui (42'') en forme de faucille réparties sur le pourtour, destinées à l'appui de la tête (44) de la vis (16).

5. Outil de fraisage suivant l'une des revendications 1 à 4, caractérisé par le fait que la première face de couplage (26, 26') se compose d'un nombre de segments bombés en forme de cylindre circulaire de grand diamètre et d'un même nombre de segments bombés au moins en forme de cylindre circulaire de petit diamètre dont l'un est chaque fois relié, avec une transition continue, à deux segments de grand diamètre.
